# EUROPEAN PATENT APPLICATION

(11) **EP 3 885 103 A2**
(43) Date of publication of application: **29.09.2021**
(21) Application number: 21164405.9
(22) Date of filing: 23.03.2021
(51) Int. Cl.: B29C 53/36, B60B 3/00, B60B 5/02

(54) **PRODUCTION PROCESS OF WHEELS MADE OF A LIGHTWEIGHT RECYCLABLE MATERIAL**

(30) Priority: 25.03.2020 IT 202000006328
(71) Applicant: RICO SRL, 62100 Macerata (MC) (IT)
(72) Inventor: CAMILLUCCI, Alvaro, TREIA (MC) (IT)
(74) Representative: Baldi, Claudio

(57) **Abstract**

A production process of wheels made of a recyclable lightweight material, comprising the step of providing a bar (T) comprising a structural layer (2) with alveolar or honeycomb structure; rolling the bar (T) around a cylindrical body (3) in such a way that the structural layer (2) of the bar (T) interferes with the cylindrical body (3), interfacing and fixing the two free ends (T1, T2) of the bar (T) when the rolling operation around the cylindrical body (3) is completed.

## Description

The present patent application relates to a production process of wheels made of a lightweight recyclable material, and to a wheel obtained with such a process.

AU2014376838B2 discloses a cardboard made wheel, which is generally planar, comprising a multi-layer cardboard body comprising at least one layer of a high-density cardboard sheet sandwiched between at least two layers of low-density cardboard sheet.

US3492016A discloses a wheeled vehicle comprising wheels made of corrugated-paperboard sheets.

The specific purpose of the present invention is to disclose a new technique for the production of wheels suitable for being used in the most diverse applications, and especially in bicycles without pedals used by toddlers, namely the so-called balance bikes.

Another purpose of the invention is to disclose a process for the production of wheels that is practical, inexpensive, rapid, versatile and effective.

A further purpose of the invention is to disclose a process for the production of wheels that are made of 100% recyclable materials, such as cardboard or PVC.

These purposes are achieved according to the invention with the characteristics of the appended independent claim 1.

Advantageous embodiments of the invention will appear from the dependent claims.

The process of the invention provides for producing wheels from the bars of alveolar cardboard or the bars with honeycomb structure made of PVC that are largely used in the building sector and in the packaging industry, but have never been used for the production of wheels, rollers or circular/cylindrical structures.

It must be noted that an ordinary bar of alveolar cardboard has a structure composed of multiple alveoli.

Bars are known, which are coated on the bottom and on top with layers of plain cardboard in order to give compactness and strength to the bars. In fact, the provision of the two coating layers of plain cardboard prevents the bar from bending with significant angles of curvature.

In view of the above, a layer of plain cardboard is removed from a traditional bar, in such a way that the bar can be bent and rolled. Such a bar can be rolled around a hub, which may consist in a cylindrical tube of rigid cardboard, in such a way to obtain a wheel.

The use of said bars of alveolar cardboard for the production of wheels is effective and reliable because of the excellent resistance of the alveolar cardboard to radial compression stress.

The bars of alveolar cardboard can be replaced with bars with honeycomb structure made of PVC, which have a similar structure to alveolar cardboard. After removing a coating layer made of plain PVC, the PVC bars can be modelled and easily rolled around a cylindrical tube.

The process of the invention is highly versatile because it can produce wheels of any diameter by additionally rolling the alveolar bar around the hub.

For the sake of clarity, the description of the invention continues with reference to the appended drawing, which has a merely illustrative, not limiting value, wherein:
Fig. 1 is an axonometric view of an alveolar bar used for the implementation of the process according to the invention;
Fig. 2 is the same view as Fig.1, during a first step of the process according to the invention;
Fig. 3 is a perspective view of a second step of the process according to the invention; and
Fig. 4 is a side view of a third step of the process according to the invention.

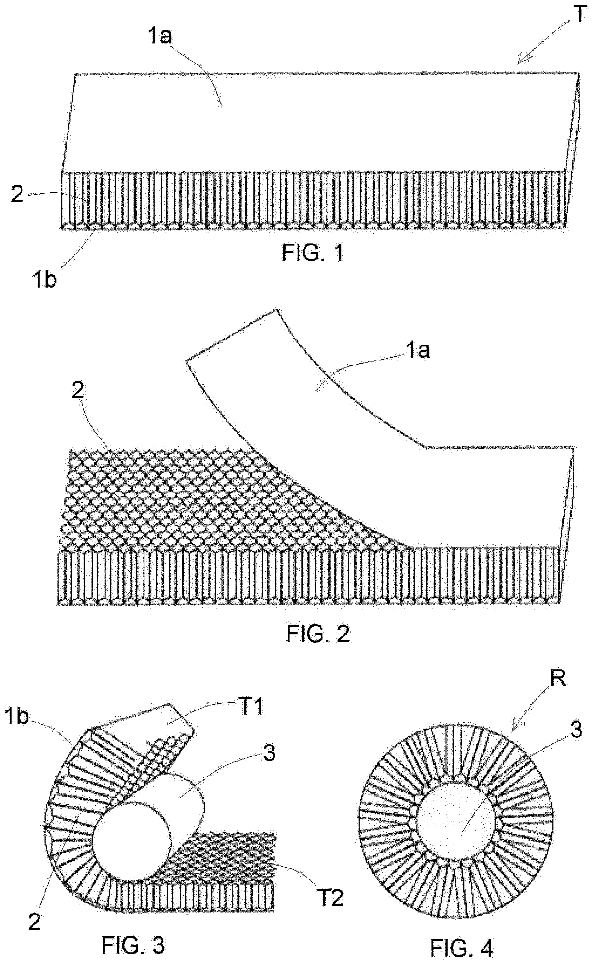

With reference to Fig. 1, the process of the invention is performed from a traditional bar (T) that is made of cardboard or PVC and is provided with a structural layer (2) with alveolar or honeycomb structure.

The bar (T) can have two coating layers (1a, 1b) that cover the structural layer (2) in sandwich configuration. The coating layers (1a, 1b) can be planar plain sheets of cardboard or PVC.

With reference to Fig. 2, if the bar is provided with the coating layers (1a, 1b), the first step of the process provides for removing a coating layer (1a). The purpose of said operation is to significantly reduce the rigidity of the bar (T), in such a way that the bar can be curved and rolled.

If the bar (T) is not provided with coating layers, optionally, only one coating layer, which consists in a planar plain sheet, can be applied.

With reference to Fig. 3, in the following step of the process, the bar (T), which only comprises the structural layer (2) or the structural layer (2) and a coating layer (2b), is rolled tightly around a cylindrical body (3) suitable for operating as the hub of a wheel. The cylindrical body (3) can be a cylindrical tube of rigid cardboard.

As shown in Fig. 4, during the rolling of the bar, the structural layer (2) of the bar (T) goes in contact with the cylindrical body (3); if any, the coating layer (1b) remains on the outside, it being the surface that rolls on the ground.

Fig. 4 illustrates the wheel (R) that is obtained with the production process of the invention, when the two free ends of the bar (T) are brought in contact one with the other, after rolling the bar (T) completely around the cylindrical body (3), and are mutually fixed in such an interfaced position. The ends of the bar can be fixed by means of gluing or thermo-welding in the case of PVC.

The process according to the invention can be used to produce wheels with different diameters by rolling only one bar (T) or multiple bars (T), which are disposed in concentric position one around the other one, around said cylindrical body (3).

Although the process is performed from a traditional bar (T), after removing a coating layer (1a), the wheel (R) can be obtained from a bar (T) that is only provided with the structural layer (2), without any coating layer, with the possible application of only one coating layer (2a) suitable for being the external surface of the wheel.

Such an alternative solution optimizes and accelerates the implementation of the process according to the invention because the bar (T) can be immediately rolled around the cylindrical body (3), without having to remove one of the two coating layers from the bar (T).

## Claims

1. Production process of wheels made of a recyclable lightweight material, comprising the step of:
a) providing a bar (T) comprising a structural layer (2) with alveolar or honeycomb structure; said bar having two free ends (T1, T2);
**characterized in that** it also comprises the following steps:
b) rolling said bar (T) around a cylindrical body (3) in such a way that said structural layer (2) of the bar (T) interferes with the cylindrical body (3); and
c) interfacing and fixing the two free ends (T1, T2) of the bar (T) when the bar is completely rolled around the cylindrical body (3) in such a way to obtain a wheel (R).

2. The process of claim 1, wherein said step a) is performed from a bar (T) comprising said structural layer (2) and two coating layers (1a, 1b), wherein a coating layer (1a) of said coating layers is removed from said bar (T), and the bar (T) is rolled in such a way that the structural layer (2) is in contact with the cylindrical body (3) and the coating layer (1b) is directed outwards.

3. The process of claim 1, wherein said step a) is performed from a bar (T) comprising only said structural layer (2), wherein a coating layer (2b) is applied on said structural layer (2) and the bar (T) is rolled in such a way that the structural layer (2) is in contact with the cylindrical body (3) and the coating layer (1b) is directed outwards.

4. The process according to any one of the preceding claims, wherein, after said step c), one or more bars (T) are rolled around said bar (T) that is rolled around said cylindrical body (3).

5. The process according to any one of the preceding claims, wherein said structural layer (2) of the bar (T) is made of cardboard.

6. The process according to any one of claims 1 to 5, wherein said structural layer (2) of the bar (T) is made of PVC.

7. The process according to any one of claims 2 to 6, wherein said coating layer (1b) applied on the structural layer (2) of the bar is a plain planar sheet.

8. The process of claim 7, wherein said coating layer (1b) applied on the structural layer (2) is made of cardboard.

9. The process of claim 7, wherein said coating layer (1b) applied on the structural layer (2) is made of PVC.

10. The process according to any one of the preceding claims, wherein said cylindrical body (3) is a cylindrical tube of rigid cardboard.

11. Wheel (R) obtained according to the production process of any one of the preceding claims.
